# EUROPEAN PATENT SPECIFICATION

(11) **EP 2 218 643 B1**
(45) Date of publication and mention of the grant of the patent: **31.08.2011**
(21) Application number: 09425037.0
(22) Date of filing: 04.02.2009
(51) Int. Cl.: B64D 15/12

(54) **Antiicing system for aircraft propellers**
Enteisungssystem für Flugzeugpropeller
Système de dégivrage pour hélice d'avion

(43) Date of publication of application: 18.08.2010
(73) Proprietor: Alenia Aeronautica S.p.A., 80038 Pomigliano D'Arco (Napoli) (IT)
(72) Inventor: Anastasio, Vincenzo, 80038 Pomigliano d'Arco (IT)
(74) Representative: Bongiovanni, Simone

(56) References cited:
- EP-A- 0 769 450
- EP-A- 1 139 354
- EP-A- 1 340 910
- EP-A- 1 414 140
- EP-A- 1 981 163
- GB-A- 584 563
- GB-A- 805 352
- GB-A- 2 293 522
- GB-A- 2 442 150
- US-A- 2 444 557
- US-B1- 6 672 835

## Description

The present invention relates to an antifreeze system for aircraft propellers.

Antifreeze systems of a chemical type are known, in which antifreeze liquid is distributed over the blades of the propeller in such a way that said liquid will bind with the drops of subcooled water of the clouds and the resulting mixture will slip over the surfaces of the propeller, without forming ice.

There moreover exist other antifreeze systems of an electrical type like that disclosed in GB 2 293 522, in which the surface of the propeller is heated by means of resistors arranged on pads installed on the leading edge of the propellers themselves; said resistors are supplied by the electrical network present on board the aircraft. To provide electrical supply, sliding contacts are used, which are subject to wear, in which case operation of the antifreeze system itself and hence flight safety may be jeopardized. Furthermore, a failure in the on-board electrical network can jeopardize supply of the antifreeze system.

The aim of the present invention is to provide an antifreeze system for aircraft propellers of a totally electrical type, which will enable the antifreeze system to be rendered independent of the on-board electrical network and the phenomena of wear linked to the presence of sliding contacts to be eliminated.

The above purpose is achieved by the present invention in so far as this relates to an antifreeze system for aircraft propellers according to claim 1.

The invention will now be described with particular reference to the attached figures, which illustrate a preferred nonlimiting embodiment thereof and in which:
- Figure 1 is a schematic illustration of an antifreeze system for aircraft obtained according to the teachings of the present invention; and
- Figure 2 is another schematic representation of the system of Figure 1.

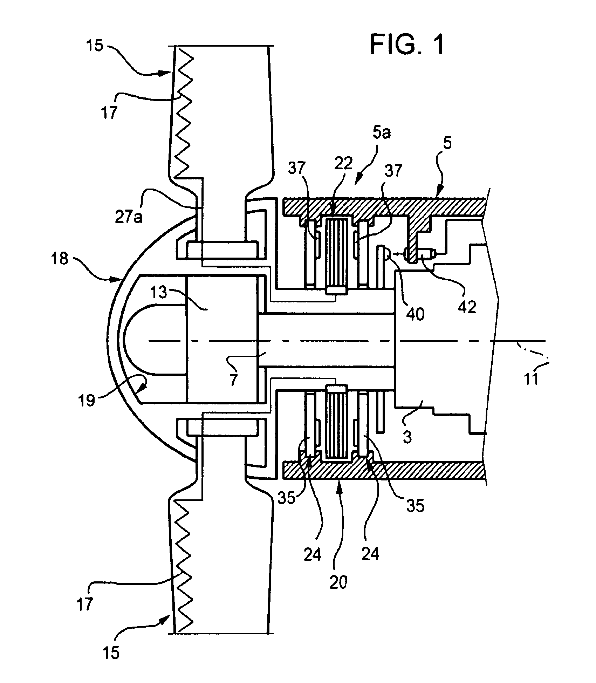

In Figure 1 designated as a whole by 1 is an antifreeze system for aircraft propellers, in which an aircraft engine 3 (for example a turbine, a piston engine, a radial engine, etc.) housed in a streamlined casing or fairing 5 sets in rotation an engine shaft 7 with longitudinal axis 11.

The propeller comprises a central hub 13 fitted on a front portion of the engine shaft 7 and a plurality of blades 15 (two, three, four, five, six, etc.), which extend radially from the hub 13. The blades 15 are made of metal material according to known techniques and comprise pads (of a known type, not represented) installed on the internal leading edges, in which resistors 17 are housed used for heating the outer surfaces of the blades 15 so as to perform the antifreeze function.

The hub 13 is covered by a nose cone 18, which radiuses at the rear with a tubular front portion 5a of the casing 5. The nose cone 18 defines inside an approximately conical internal cavity 19.

According to the present invention an axial-flux electric machine 20 (of a known type and consequently not described in further detail) is coupled to and set in rotation by the engine shaft 7 so as to operate as generator and deliver a current used for supply of the resistors 17.

More precisely, the arrangement of the axial-flux electric machine 20 is such that the rotor 22 that carries the windings is angularly fixed with respect to the engine shaft 7, and the stator 24 that carries the magnets is angularly fixed with respect to the streamlined casing 5.

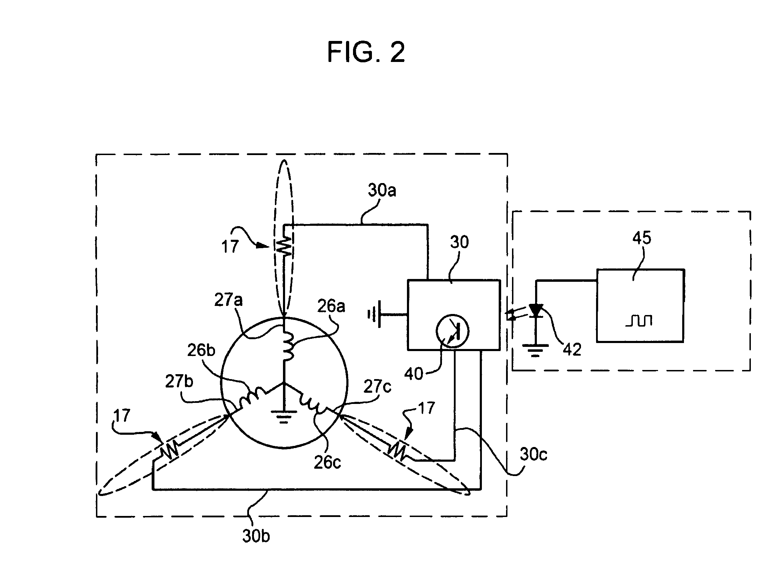

In the example of embodiment illustrated, the rotor 22 comprises a toroidal core (obtained according to known technologies) made of ferromagnetic material, in which a plurality of slots are provided, which extend radially and house insulated electrical conductors wound around the toroidal core to provide a first winding 26a, a second winding 26b, and a third winding 26c (Figure 2), which have first terminals communicating with a common potential and second terminals connected, respectively, to a first electrical line 27a, a second electrical line 27b, and a third electrical line 27c.

The first, second, and third electrical lines 27a, 27b, 27c communicate with first terminals of the resistors 17, which have respective second terminals communicating with a switch device 30 through electrical return lines 30a, 30b and 30c.

The toroidal core is set sharing the axis 11 and is housed inside the front portion 5a (Figure 1).

The stator 24, built according to known technologies, comprises a pair of disks 35 made of non-magnetic metal material set on opposite sides with respect to the rotor 22. Each disk 35 carries a plurality of permanent magnets 37 set at angular distances apart from one another and facing the side walls of the toroidal core. Typically, the permanent magnets 37, of a plane type, have in plan view a trapezial shape.

The disks 35 have perimetral portions fixed to the front portion 5a of the streamlined casing 5 and are hence angularly fixed with respect to the portion 5a.

The switch device 30 comprises, amongst other things, a photo-sensor 40, integral with the shaft 7 and facing the front portion 5a of the streamlined casing 5 for receiving an optical signal generated by a photo-emitter 42 carried by the streamlined casing 5.

The photo-emitter 42 (Figure 2) is supplied by a control circuit 45 (according to a pre-set ON/OFF operating cycle) so as to generate a pulse of light (either in the visible or in the infrared), which, after being received by the photo-sensor 40, controls, upon each rotation of the nose cone, the closing of solid-state electronic switches (not illustrated) of the switch device 30 to provide the connection of the first electrical line 27a, the second electrical line 27b, and the third electrical line 27c with the common potential. In this way, following upon an activation command of an optical type that closes the switches referred to above, the electrical resistors 17 set in series to the windings 26a, 26b, 26c dissipate, by the Joule effect, the electric current generated by the electric machine 20, thus reproducing the normal performance of the antifreeze system for propellers of aircraft. The photo-sensitive element 40 provides a so-called "memory effect", i.e., it is able to preserve the state (open/closed) until the next passage. In the case where with the next rotation the photo-sensor 40 does not perceive any light radiation (OFF position), the solid-state electronic switches (not illustrated) of the switch device 30 open to provide uncoupling of the first, second, and third electrical lines 27a, 27b, 27c from the common potential, and the passage of current in the resistors is interrupted so that the antifreeze system is turned off.

In use, following upon starting of the engine 3, the rotor windings 26a, 26b, 26c move angularly with respect to the magnets 37 carried by the two disks 35; there is thus generated a flux of magnetic field variable in time, which impinges upon the rotor windings 26a, 26b, 26c, where induced electromotive forces are formed, which are necessary, following upon closing of the electronic switch 30, for generation of the currents that supply the resistors of the antifreeze system.

In other words, during rotation of the propeller, the flux of (fixed) magnetic field generated by the permanent magnets 37 set facing the rotor 22 is cut by the windings 26a, 26b, 26c, which rotate integral whit the nose cone 18, thus "sensing" the variability of the magnetic flux.

Following upon closing of the switch 30 by opto-electronic command (see what has been said above - said command ensures a galvanic separation), the induced voltages present on the windings 26a, 26b, 26c concur in the creation of currents that flow in the resistors 17 that heat the blades 15, thus providing the antifreeze action.

In this way, the energy produced by rotation of the nose cone 18 and hence of the propellers is used, and the antifreeze system is rendered independent of the on-board electrical network.

## Claims

1. An antifreeze system for aircraft propellers, wherein an aircraft engine (3) housed in a casing (5) sets in rotation an engine shaft (7), which carries a plurality of blades (15) provided with internal resistors (17) used for heating the outer surfaces of the blades (15) so as to perform the antifreeze function, said system comprising an axial-flux electric machine (20) coupled to and set in rotation by the engine shaft (7) so as to operate as generator and deliver a current used for supply of the resistors (17), wherein optically actuated switch means (30) are provided, set between the windings (26a, 26b, 26c) of the rotor of the axial-flux reversible electric machine (20) and said resistors (17),
**characterized in that** said optically actuated switch means (30) comprise a photo-sensor (40), angularly integral with the engine shaft (7) of the propellers and facing a front portion (5a) of the casing (5) and configured for receiving an optical signal generated by a photo-emitter (42) carried by the casing (5); control means (45) are provided for generating an optical pulse, which, after being received by the photo-sensor (40), controls closing of solid-state electronic switches of the switch means (30) to supply said electrical resistors (17) in series with said windings (26a, 26b, 26c).

2. The system according to Claim 1, wherein the arrangement of the axial-flux reversible electric machine (20) is such that the rotor (22) that carries the windings is angularly integral with the engine shaft (7), and the stator (24) that carries the magnets is angularly integral with the casing (5).

3. The system according to Claim 2, wherein said stator is housed within, and is carried by, an end portion (5a) of said casing (5).

4. The system according to any one of the preceding claims, wherein said stator (24) comprises a pair of disks (35) made of non-magnetic metal material set on opposite sides with respect to the rotor (22); each disk (35) carries a plurality of permanent magnets (37) set at angular distances apart from one another and facing the side walls of the toroidal core of said rotor (24).

## Patentansprüche

1. Gefrierschutzsystem für Flugzeugpropeller,
wobei ein in einem Gehäuse (5) aufgenommener Flugzeugmotor (3) eine Motorwelle (7) in Rotation versetzt, wobei die Motorwelle (7) eine Mehrzahl an Flügeln (15) trägt, welche mit internen Widerständen (17) ausgestattet sind, welche zum Erwärmen der äußeren Flächen der Flügel (15) genutzt werden, um so die Gefrierschutzfunktion auszuführen,
wobei das System eine elektrische Maschine mit axialem Magnetfluss (20) aufweist, welche mit der Motorwelle (7) gekoppelt ist und von dieser in Rotation versetzt wird, um so als Generator zu wirken und einen Strom zu liefern, der zur Versorgung der Widerstände (17) genutzt wird,
wobei optisch betätigte Schaltermittel (30) vorgesehen sind, welche zwischen den Wicklungen (26a, 26b, 26c) des Rotors der umschaltbaren elektrischen Maschine mit axialem Magnetfluss (20) und der Widerstände (17) angeordnet sind, **dadurch gekennzeichnet,**
**dass** die optisch betätigten Schaltermittel (30) einen Lichtsensor (40) aufweisen, der drehfest mit der Motorwelle (7) der Propeller verbunden ist und einem Frontbereich (5a) des Gehäuses (5) zugewandt ist und dazu eingereichtet ist, ein optisches Signal zu empfangen, welches von einem von dem Gehäuse (5) getragenen Lichtsender (42) erzeugt wird;
**dass** Steuermittel (45) vorgesehen sind zum Erzeugen eines optischen Pulses, welcher, nachdem er von dem Lichtsender (40) empfangen worden ist, ein Schließen von elektronischen Halbleiter-Schaltern der Schaltermittel (30) steuert, um die elektrischen Widerstände (17), welche mit den Wicklungen (26a, 26b, 26c) in Reihe geschaltet sind, zu versorgen.

2. System nach Anspruch 1,
wobei die umschaltbare elektrische Maschine mit axialem Magnetfluss (20) so angeordnet ist, dass der Rotor (22), der die Wicklungen trägt, drehfest mit der Motorwelle (7) verbunden ist, und der Stator (24), der die Magnete trägt, drehfest mit dem Gehäuse (5) verbunden ist.

3. System nach Anspruch 2,
wobei der Stator in einem Endbereich (5a) des Gehäuses (5) aufgenommen und von diesem getragen ist.

4. System nach einem der vorausgegangenen Ansprüche,
wobei der Stator (24) ein Paar an Scheiben (35) aufweist, welche aus einem nicht-magnetischen metallischen Material hergestellt und auf gegenüberliegenden Seiten bezüglich des Rotors (22) angeordnet sind;
wobei jede Scheibe (35) eine Mehrzahl an Permanentmagneten (37) trägt, die zueinander in Winkelabständen angeordnet und den Seitenwänden des Ringkerns des Rotors (22) zugewandt sind.

## Revendications

1. Système antigel d'hélices d'avions, dans lequel un moteur d'avion (3) logé dans une enveloppe (5) met en rotation un arbre de moteur (7), qui porte une pluralité de pales (15) dotées de résistances intérieures (17) utilisées pour chauffer les surfaces extérieures des pales (15) de façon à remplir la fonction d'antigel, ledit système comprenant une machine électrique à flux axial (20) couplée à l'arbre de moteur (7) et mise en rotation par celui-ci, de façon à fonctionner en tant que générateur et à fournir un courant utilisé pour alimenter les resistances (17), dans lequel sont fournis des moyens de commutation actionnés de manière optique (30), disposés entre les enroulements (26a, 26b, 26c) du rotor de la machine électrique réversible à flux axial (20) et lesdites résistances (17) ;
**caractérisé en ce que** lesdits moyens de commutation actionnés de manière optique (30) comprennent un capteur photoélectrique (40), solidaire de manière angulaire avec l'arbre de moteur (7) des hélices et faisant face à une partie avant (5a) de l'enveloppe (5) et configuré de façon à recevoir un signal optique généré par un émetteur photoélectrique (42) porté par l'enveloppe (5); des moyens de commande (45) sont prévus de façon à générer une impulsion optique qui, après avoir été reçue par le capteur photoélectrique (40), commande la fermeture des commutateurs électroniques à semi-conducteur des moyens de commutation (30) de façon à alimenter lesdites résistances électriques (17) en série avec lesdits enroulements (26a, 26b, 26c).

2. Système selon la revendication 1, dans lequel l'agencement de la machine électrique réversible à flux axial (20) est tel que le rotor (22) qui porte les enroulements soit solidaire de manière angulaire avec l'arbre de moteur (7), et que le stator (24) qui porte les aimants soit solidaire de manière angulaire avec l'enveloppe (5).

3. Système selon la revendication 2, dans lequel ledit stator est logé à l'intérieur d'une, et est porté par une, partie d'extrémité (5a) de ladite enveloppe (5).

4. Système selon l'une quelconque des revendications précédentes, dans lequel ledit stator (24) comprend une paire de disques (35) réalisés dans une matériau de métal amagnétique disposés sur des côtés opposés par rapport au rotor (22); chaque disque (35) porte une pluralité d'aimants permanents (37) placés à des distances angulaires les uns des autres et faisant face aux parois latérales du noyau torique dudit rotor (22).
